# EUROPÄISCHE PATENTSCHRIFT

(11) **EP 2 984 228 B1**
(45) Veröffentlichungstag und Bekanntmachung des Hinweises auf die Patenterteilung: **09.01.2019**
(21) Anmeldenummer: 14714711.0
(22) Anmeldetag: 02.04.2014
(51) Int. Cl.: D21H 21/30, D21H 21/40, D21H 21/42, D21H 21/44, D21H 21/46, D21H 21/48, B42D 15/00, D21H 15/10, D01F 1/04, C09K 11/59, D01D 5/30, B42D 25/36, B42D 25/23, B42D 25/309, B42D 25/387, C09J 7/20

(54) **MULTILUMINESZENTES SICHERHEITSELEMENT UND DIESES ENTHALTENDES WERT- ODER SICHERHEITSPRODUKT**
MULTI-LUMINESCENT SECURITY ELEMENT AND VALUE OR SECURITY PRODUCT CONTAINING SAID SECURITY ELEMENT
ÉLÉMENT DE SÉCURITÉ MULTILUMINESCENT ET PRODUIT DE VALEUR OU DE SÉCURITÉ CONTENANT CET ÉLÉMENT

(30) Priorität: 08.04.2013 DE 102013206130
(43) Veröffentlichungstag der Anmeldung: 17.02.2016
(73) Patentinhaber: Bundesdruckerei GmbH, 10969 Berlin (DE)
(72) Erfinder: KUNATH, Christian, 12203 Berlin (DE); KRÜGER, Per, 14197 Berlin (DE); MOMBRÉE, Alexander, 10829 Berlin (DE); VON CZAPIEWSKI, Christoph, 14050 Berlin (DE)
(74) Vertreter: Bressel, Burkhard
(86) Internationale Anmeldenummer: PCT/EP2014/056607
(87) Internationale Veröffentlichungsnummer: WO 2014/166794

(56) Entgegenhaltungen:
- DE-A1- 3 121 523
- DE-B3-102009 040 747
- DE-T2- 3 788 503

## Beschreibung

Die vorliegende Erfindung betrifft ein multilumineszentes Sicherheitselement sowie ein mindestens ein derartiges Sicherheitselement enthaltendes Wert- oder Sicherheitsprodukt, insbesondere Wert- oder Sicherheitsdokument. Ein Wert- und/oder Sicherheitsdokument kann beispielsweise ein Personaldokument, insbesondere ein Personalausweis, oder ein Zahlungsmittel, insbesondere eine Banknote, sein. Derartige Dokumente werden typischerweise in normierten Formaten hergestellt, beispielsweise im ID 1-, ID 2- oder ID 3-Format gemäß ISO 7810. Die Dokumente können grundsätzlich aus einem organischen Polymer oder einem Keramikwerkstoff, Papier, Pappe oder aus Metall bestehen oder dieses enthalten. Karten und kartenförmige Bestandteile von buchartigen Dokumenten können vorzugsweise aus miteinander laminierten Polymerfolien hergestellt sein. Zur Prüfung der Echtheit und/oder zur Kodierung von Information weisen diese Dokumente Sicherheitsmerkmale auf.

Die in den Wert- und/oder Sicherheitsdokumenten eingesetzten Sicherheitsmerkmale können beispielsweise ausschließlich dazu dienen, die Echtheit der Dokumente unabhängig von ihrer Art oder von ihrem Benutzer nachzuweisen. Derartige Sicherheitsmerkmale sind beispielsweise Guillochen, Wasserzeichen, Prägedrucke, Kippbilder, Hologramme, Melierfasern, das Spezialpapier von Banknoten und dergleichen. Individualisierende, beispielsweise personalisierende, Sicherheitsmerkmale enthalten darüber hinaus in kodierter Form oder auch in Klarschrift eine Information über die Art des Dokuments, über dessen Inhaber und/oder über einen Gegenstand, dem das Dokument zugeordnet ist.

Aus DE 199 62 790 A1 ist ein Sicherheitspapier mit aufgebrachter Codierung aus lumineszierenden Melierfasern angegeben. Das Sicherheitspapier ist hierzu mit zwei Arten von Melierfasern versehen, die sich hinsichtlich ihrer lumineszierenden Eigenschaften unterscheiden. Jeweils eine Art von Melierfasern liegt in einem definierten Teilbereich des Sicherheitspapiers vor. Die Codierung wird durch die definierte geometrische Anordnung der Teilbereiche und/oder durch die An- oder Abwesenheit von Melierfasern einer bestimmten Art dargestellt. Durch Anordnung der Melierfasern in unterschiedlichen Teilbereichen lassen sich die Melierfasern einfach lokalisieren und die lumineszierenden Eigenschaften unabhängig voneinander messen. Vorzugsweise bestehen die Melierfasern aus transparenten Kunststofffasern, die im Volumen mit im visuellen Spektralbereich weit gehend transparenten Lumineszenzstoffen eingefärbt sind.

Aus DE 10 2009 040 747 B3 ist ein Wert- oder Sicherheitsdokument mit fluoreszierenden Melierfasern bekannt. Die Melierfasern sind zumindest mit einem ersten und einem zweiten Lumineszenzstoff markiert, wobei der erste Lumineszenzstoff unter ersten Anregungsbedingungen erstes Lumineszenzlicht und der zweite Lumineszenzstoff unter zweiten Anregungsbedingungen zweites Lumineszenzlicht emittieren. Die ersten und zweiten Anregungsbedingungen sind nicht identisch, und das erste und das zweite Lumineszenzlicht unterscheiden sich spektral. Die Melierfasern bestehen wenigstens teilweise aus einem Kleber. Sie weisen wenigstens einen ersten und einen zweiten Teilbereich auf, wobei der erste Teilbereich aus dem Kleber besteht. Beispielsweise ist der erste Teilbereich mit dem ersten Lumineszenzstoff markiert und der zweite Teilbereich mit dem zweiten Lumineszenzstoff. Dadurch kommt es zu einer räumlichen Trennung der unterschiedlichen lumineszierenden Bereiche. Zur Aufbringung der Melierfasern auf eine zur Herstellung des Wert- oder Sicherheitsdokuments verwendete Folie werden diese auf die Folie aufgestreut, woraufhin der Kleber erwärmt wird.

Die in DE 10 2009 040 747 B3 beschriebenen bilumineszenten Melierfasern können zwar unter unterschiedlichen spektralen Anregungsbedingungen zu spektral unterschiedlicher Lumineszenz angeregt werden. Jedoch besteht ein Nachteil darin, dass mit höherenergetischer Anregungsstrahlung beide Lumineszenzstoffe angeregt werden. Dadurch wird kein guter Kontrast der Lumineszenz zwischen den einzelnen Teilbereichen der Fasern erhalten. Würden die Lumineszenzstoffe nicht einmal in unterschiedlichen Teilbereichen der Fasern enthalten sein, würde die emittierte Strahlung zumindest bei Einstrahlung der höherenergetischen Anregungsstrahlung nur eine Mischfarbe ergeben. In diesem Falle würde der Farbton durch das Mischungsverhältnis der beiden Stoffe gebildet sein. Die Farbreinheit jedes einzelnen Stoffes könnte jedoch nicht erreicht werden.

Der vorliegenden Erfindung liegt von daher die Aufgabe zugrunde, lumineszierende Sicherheitselemente zu schaffen, die unter unterschiedlichen Anregungsbedingungen eine leuchtkräftige Lumineszenz mit unterschiedlicher Lumineszenz ergeben. Insbesondere soll ein hervorragender Umschalteffekt/Farbwechsel erreicht werden. Die Lumineszenz soll auch alterungsbeständig sein. Die Sicherheitselemente sollen insbesondere gut für Wert- oder Sicherheitsprodukte, insbesondere Wert- oder Sicherheitsdokumente, besonders bevorzugt für Wert- oder Sicherheitskarten und vor allem für Sicherheitsdokumente auf der Basis von Polycarbonat-Materialien, geeignet sein.

Soweit in der Beschreibung und in den Ansprüchen der vorliegenden Anmeldung der Begriff ,Wert- oder Sicherheitsprodukt, der Wert- oder Sicherheitsdokumente einschließt, verwendet wird, ist darunter beispielsweise ein Reisepass, Personalausweis, Führerschein oder eine andere ID-Karte oder ein Zugangskontrollausweis, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, ein Steuerzeichen, Postwertzeichen, Ticket, (Spiel-)Jeton, Haftetikett (beispielsweise zur Produktsicherung) oder ein anderes Produkt zu verstehen. Das Produkt kann beispielsweise eine Smartcard sein. Das Wert- oder Sicherheitsdokument kann im ID 1-, ID 2-, ID 3-Format oder in irgendeinem anderen Format vorliegen, beispielsweise in Heftform wie bei einem passähnlichen Gegenstand. Ein Wert- oder Sicherheitsprodukt ist im Allgemeinen ein Laminat aus mehreren Dokumentenlagen, die passergenau unter Wärmeeinwirkung und unter erhöhtem Druck flächig miteinander verbunden sind. Diese Produkte sollen den normierten Anforderungen genügen, beispielsweise ISO 10373, ISO/IEC 7810, ISO 14443. Die Produktlagen bestehen beispielsweise aus einem Trägermaterial, das sich für eine Lamination eignet.

Das Wert- oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, ferner Papier, Pappe, Glas, Metall oder Keramik. Das Produkt kann aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12 Folien, vorzugsweise 4 bis 10 Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise ein kinegrafisches Element) oder eine Kratzschutzfolie sein. Derart gebildete Overlaylagen schützen ein darunter angeordnetes Sicherheitsmerkmal und/oder verleihen dem Produkt die erforderliche Abriebfestigkeit. Gegebenenfalls kann das Sicherheitsmerkmal auf einer der inneren Lagen gebildet sein.

Soweit in der Beschreibung und in den Ansprüchen der vorliegenden Anmeldung der Begriff 'Lumineszenz' genannt wird, ist darunter Fluoreszenz, Phosphoreszenz und zwar sowohl mit Stokes- als auch Anti-Stokes-Verschiebung zu verstehen. Nicht darunter zu verstehen ist eine Remission absorbierter elektromagnetischer Strahlung. Gemäß der vorliegenden Erfindung ist darunter vorzugsweise Photolumineszenz zu verstehen.

Soweit nachfolgend jeweils Begriffe in der Singularform verwendet werden, beispielsweise ein 'erstes Lumineszenzmittel' oder ein 'zweites Lumineszenzmittel' oder ein Absorbermittel' so können darunter jeweils auch die Pluralformen zu verstehen sein, nämlich im Sinne von 'mindestens ein erstes Lumineszenzmittel', 'mindestens ein zweites Lumineszenzmittel' oder 'mindestens ein Absorbermittel', sofern nicht ausdrücklich etwas anderes angegeben ist.

Die vorstehend genannten Aufgaben werden durch ein multilumineszentes, insbesondere bilumineszentes, Sicherheitselement sowie ein Wert- oder Sicherheitsprodukt gelöst, das mindestens ein multilumineszentes Sicherheitselement enthält oder auf das ein derartiges Sicherheitselement aufgebracht ist.

Das erfindungsgemäße multilumineszente Sicherheitselement kann beispielsweise in Form eines Filaments oder einer Gruppe von Filamenten ausgebildet sein, insbesondere in Form einer Faser, weiter bevorzugt einer Melierfaser, oder auch in Form eines Sicherheitsfadens. Alternativ kann das Sicherheitselement auch durch Planchetten gebildet sein. Derartige Typen von Sicherheitselementen können in das Innere des Produkts integriert werden. Das erfindungsgemäße Sicherheitselement kann auch ein Transferelement, beispielsweise ein Aufkleber, Etikett oder dergleichen, sein, das mit einem Vorprodukt eines Wert- oder Sicherheitsdokuments unlösbar verbunden werden kann, um das Wert- und/oder Sicherheitsdokument zu bilden. Derartige Elemente können auf die Oberfläche des Dokuments aufgebracht oder in das Innere des Dokuments integriert werden.

Das multilumineszente Sicherheitselement enthält gemäß der vorliegenden Erfindung mindestens ein erstes Lumineszenzmittel, das unter ersten Anregungsbedingungen zur Lumineszenz anregbar ist. Ferner enthält das Sicherheitselement mindestens ein zweites Lumineszenzmittel, das unter zweiten Anregungsbedingungen zur Lumineszenz anregbar ist, die von den ersten Anregungsbedingungen verschieden sind. Außerdem können sich die Lumineszenzmittel auch hinsichtlich ihres Emissionsverhaltens voneinander unterscheiden. Beispielsweise können das mindestens eine erste Lumineszenzmittel ein erstes Lumineszenzspektrum und das mindestens eine zweite Lumineszenzmittel ein zweites Lumineszenzspektrum aufweisen, die insbesondere hinsichtlich der spektralen Verteilung der Emissionsintensität gleich oder vorzugsweise unterschiedlich sind. Ferner können noch weitere Lumineszenzmittel enthalten sein, deren Anregungsbedingungen von denen des mindestens einen ersten und mindestens einen zweiten Lumineszenzmittels verschieden sind. Die Lumineszenzspektren dieser weiteren Lumineszenzmittel können ebenfalls gleich oder unterschiedlich zu denen des mindestens einen ersten und mindestens einen zweiten Lumineszenzmittels sein. In dem multilumineszenten Sicherheitselement ist zusätzlich mindestens ein Absorbermittel enthalten, das eine Anregung des mindestens einen ersten Lumineszenzmittels unter den zweiten Anregungsbedingungen zur Lumineszenz, jedoch nicht unter den ersten Anregungsbedingungen, verhindert. Das bedeutet, dass das mindestens eine Absorbermittel dazu ausgebildet ist, elektromagnetische Strahlung (zumindest auch) in einem Spektralbereich (zweite Anregungsbedingungen) zu absorbieren, in dem das mindestens eine erste Lumineszenzmittel absorbiert, sodass es zur Lumineszenz angeregt wird. Falls mehr als zwei Lumineszenzmittel vorhanden sind, können auch mehrere Absorbermittel vorhanden sein, die jeweils selektiv die Anregung eines diesem jeweiligen Absorbermittel zugeordneten Lumineszenzmittels verhindern, indem sie elektromagnetische Strahlung in anderen Spektralbereichen absorbieren als in dem Spektralbereich, in dem Anregungsstrahlung für das ihm zugeordnete Lumineszenzmittel liegt.

Die ersten Anregungsbedingungen schließen vorzugsweise ein, dass das erste Lumineszenzmittel bei einer niedrigeren Energie Strahlung absorbiert als das zweite Lumineszenzmittel.

Bevorzugt ist es, wenn das mindestens eine erste Lumineszenzmittel und das mindestens eine zweite Lumineszenzmittel sowie gegebenenfalls weitere Lumineszenzmittel in jeweils räumlich voneinander getrennten Elementbereichen enthalten sind, d.h. das mindestens eine erste Lumineszenzmittel befindet sich ausschließlich in einem ersten Elementbereich und das mindestens eine zweite Lumineszenzmittel ausschließlich in einem zweiten Elementbereich. Falls weitere Lumineszenzmittel vorhanden sind, beispielsweise mindestens ein drittes Lumineszenzmittel, mindestens ein viertes Lumineszenzmittel usw., können auch weitere Elementbereiche vorgesehen sein, in denen sich die entsprechenden weiteren Lumineszenzmittel eines Typs befinden. Es versteht sich, dass sich die Lumineszenzmittel in dieser bevorzugten Ausführungsform ausschließlich in ihrem jeweiligen Elementbereich befinden, nicht jedoch in einem Elementbereich des jeweils anderen Lumineszenzmittels. Durch die räumliche Trennung der Lumineszenzmittel in unterschiedliche Elementbereiche wird eine zusätzliche Verbesserung des Farbkontrastes zwischen den Lumineszenzmitteln erreicht.

Grundsätzlich besteht auch die Möglichkeit, dass sich die ersten, zweiten und gegebenenfalls weiteren Lumineszenzmittel in räumlich nicht voneinander getrennten Bereichen befinden sondern in denselben Volumenbereichen, d.h. dass sich das erste Lumineszenzmittel nicht nur in dem ersten Elementbereich sondern auch in dem zweiten Elementbereich befindet und/oder dass sich das zweite Lumineszenzmittel nicht nur in dem zweiten Elementbereich sondern auch in dem ersten Elementbereich befindet. Entsprechendes gilt dann auch für dritte und noch weitere Lumineszenzmittel. Allerdings ist es bevorzugt, wenn sich das erste Lumineszenzmittel ausschließlich in dem ersten Elementbereich befindet, während das zweite Lumineszenzmittel sowohl in dem ersten als auch in dem zweiten Elementbereich enthalten sein kann. Entsprechendes gilt für weitere Lumineszenzmittel. Es ist außerdem denkbar, dass sich einige Lumineszenzmittel, beispielsweise ein erstes und ein zweites Lumineszenzmittel, in einem gemeinsamen Volumenbereich befinden und weitere Lumineszenzmittel in davon getrennten und jeweils auch voneinander getrennten Volumenbereichen enthalten sind.

Derartige Sicherheitselemente können bevorzugt in Wert- oder Sicherheitsprodukten eingesetzt werden, beispielsweise in Karten oder papierbasierenden Dokumenten, wie Banknoten.

Bilumineszenz (oder allgemeiner Multilumineszenz) ist als Sicherheitsmerkmal in Wert- oder Sicherheitsprodukten einsetzbar. Unter Bilumineszenz ist ein Lumineszenzeffekt zu verstehen, der beim Wechsel des Anregungslichtes eine veränderte Lumineszenzemission herbeiführt. Beispielsweise leuchtet ein Merkmal bei Anregung mit UV A-Strahlung grün und bei Anregung mit UV B-Strahlung orange. Bei Verwendung bilumineszenter Sicherheitsmerkmale können zwei Leuchtstoffe gemischt werden, die ein unterschiedliches Anregungsverhalten aufweisen. Die meisten für Wert- oder Sicherheitsprodukte eingesetzten Lumineszenzmittel haben ein Anregungsspektrum, d.h. ein Absorptionsspektrum für die zur Anregung zur Lumineszenz verwendete elektromagnetische Strahlung, das einen spektralen Verlauf aufweist, der, ausgehend von einem mehr oder minder ausgeprägten niederenergetischen Schwellenwert, zu höherenergetischen Werten im Wesentlichen kontinuierlich verläuft (Kantenabsorber). Ohne das Absorbermittel würde bei einer Anregung des ersten Lumineszenzmittels bei Verwendung von zwei verschiedenen Lumineszenzmitteln mit unterschiedlichem Anregungsverhalten, beispielsweise in unterschiedlichen Volumenbereichen des Wert- oder Sicherheitsprodukts oder auch in demselben Volumenbereich, mittels einer hierfür geeigneten niederenergetischen (längerwelligen) Strahlung das zweite Lumineszenzmittel zwar nicht angeregt. Dagegen würde ohne das Absorbermittel eine zur Anregung des zweiten Lumineszenzmittels geeignete höherenergetische (kürzerwellige) Strahlung auch von dem ersten Lumineszenzmittel absorbiert, sodass letzteres unter diesen Bedingungen zusammen mit dem zweiten Lumineszenzmittel zur Lumineszenz angeregt würde. Dadurch wäre der Farbkontrast zwischen den beiden Volumenbereichen beispielsweise auch dann, wenn sich die beiden Lumineszenzmittel in unterschiedlichen Volumenbereichen des Produkts befinden, gering. Falls sich die beiden Mittel in demselben Volumenbereich befinden, ergäbe sich unter den zuletzt genannten Anregungsbedingungen nur eine Mischfarbe. Der Farbton wird in diesem Falle durch das Verhältnis der beiden Leuchtmittel bestimmt. Eine Farbreinheit der einzelnen Lumineszenzmittel kann unter diesen Bedingungen jedoch nicht erreicht werden. Um dieses Problem zu lösen, könnte das Mischungsverhältnis der beiden Leuchtstoffe in geeigneter Weise eingestellt werden. Beispielsweise könnte der von beiden Anregungsstrahlungen angeregte Leuchtstoff in geringer und der andere in höherer Menge eingesetzt werden. Allerdings ist dadurch die Flexibilität der Gestaltung des Sicherheitsmerkmals deutlich eingeschränkt.

Durch zusätzliche Verwendung des Absorbermittels wird nun verhindert, dass das erste Lumineszenzmittel unter den Anregungsbedingungen zur Lumineszenz angeregt wird, unter denen das zweite Lumineszenzmittel zur Lumineszenz anregbar ist, wobei die Anregung des ersten Lumineszenzmittels zur Lumineszenz mittels hierfür geeigneter Strahlung ohnehin nicht zur Anregung des zweiten Lumineszenzmittel führt, weil diese Strahlung eine zu niedrige Energie hat. Daher kann sich das zweite Lumineszenzmittel auch in demselben Elementbereich befinden wie das erste Lumineszenzmittel, ohne die Selektivität der Anregung zur Lumineszenz zu beeinträchtigen. Durch Verwendung des Absorbermittels ergibt sich der wesentliche Vorteil, dass ein hervorragender Farbkontrast zwischen zwei Bereichen des Produkts erzielt wird, die jeweils eines der beiden Lumineszenzmittel enthalten, und dass durch Anregung zur Lumineszenz die reinen Leuchtfarben erzielt werden. Mittels der vorliegenden Erfindung werden auch Leuchtfarben erhalten, die gesättigter sind als ohne Verwendung eines Absorbermittels. Dies ist auch an einem größeren Abstand der jeweiligen Farbkoordinaten im CIE-xy-Farbraum oder in einem anderen Farbraum erkennbar. Durch die Realisierung der Erfindung ist es zudem möglich, die Leuchtstoffe unabhängig voneinander auszuwählen, weil eine Beeinflussung durch die Anwesenheit des mindestens einen Absorbers ausgeschaltet wird. Daher sind auch Materialkombinationen möglich. Dies führt zu einer hohen Flexibilität hinsichtlich der Auswahl der Lumineszenzmittel und von deren Mengenverhältnissen.

Für die Zwecke der vorliegenden Erfindung reicht es vollständig aus, dass das Absorbermittel in dem multilumineszenten Sicherheitselement derart enthalten ist, dass eingestrahlte Anregungsstrahlung für das zweite Lumineszenzmittel nicht zur Anregung des ersten Lumineszenzmittels zur Lumineszenz führt. Beispielsweise kann sich das Absorbermittel in demselben Volumenbereich befinden, in dem sich auch das erste Lumineszenzmittel befindet. Oder das Absorbermittel ist in einem Volumenbereich in dem Sicherheitselement enthalten, der den Volumenbereich abschirmt, in dem sich das erste Lumineszenzmittel befindet. Hierzu kann der Absorber-Volumenbereich den Volumenbereich des ersten Lumineszenzmittels vollständig umgeben oder zumindest zu der Seite abschirmen, von der der Betrachter das Sicherheitselement aus betrachtet und/oder von dem aus die Anregungsstrahlung auf das Sicherheitselement eingestrahlt wird. Von daher kann der erste Elementbereich in einer bevorzugten Weiterbildung der vorliegenden Erfindung das mindestens eine Absorbermittel enthalten. Oder der erste Elementbereich kann von einer das mindestens eine Absorbermittel enthaltenden Abschirmzone umgeben sein. Entsprechendes gilt auch für den Fall, das nicht nur ein erstes und ein zweites sondern auch weitere Lumineszenzmittel enthalten sind.

Somit wird ein alterungsstabiles multilumineszentes Sicherheitselement, insbesondere eine alterungsstabile multilumineszente Melierfaser, geschaffen. Durch die Anwesenheit des Absorbermittels ergibt sich ein hervorragender Umschalteffekt bzw. Farbwechsel, wenn die Anregungsstrahlung jeweils ausgewählt wird, um eines der Lumineszenzmittel selektiv zur Lumineszenz anzuregen. Das erfindungsgemäße Sicherheitselement kann insbesondere aus Polycarbonat bestehen und/oder für Wert- oder Sicherheitsprodukte, insbesondere Wert- oder Sicherheitsdokumente, geeignet sein, die zumindest überwiegend aus Polycarbonat bestehen.

Die Elementbereiche können aus dem Material gebildet sein, das die Matrix (den Hauptbestandteil) für das jeweilige mindestens eine Lumineszenzmittel ausbildet. Dieses Material kann eines der für das Wert- oder Sicherheitsprodukt genannten Materialien sein. Für die Anwendung des erfindungsgemäßen Sicherheitselements sind die bevorzugten Materialien weiter unten angegeben. Die Elementbereiche können auch aus verschiedenen Materialien gebildet sein. Beispielsweise kann eines der Materialien das mindestens eine Absorbermittel bilden, das erforderlich ist, um die Anregung des mindestens einen ersten Lumineszenzmittels zur Lumineszenz mit Anregungsstrahlung für das mindestens eine zweite Lumineszenzmittel zu verhindern.

Das erste und das zweite und gegebenenfalls weitere Lumineszenzmittel kann jeweils aus einem einzigen Lumineszenzstoff gebildet sein oder auch durch Mischungen mehrerer Lumineszenzstoffe. Gleichermaßen kann das Absorbermittel durch einen einzigen Absorberstoff oder durch eine Mischung mehrerer Absorberstoffe gebildet sein.

Derartige Lumineszenzstoffe sind bekannt. Es handelt sich bevorzugt um Stoffe, die Lumineszenzstrahlung im sichtbaren Spektralbereich (400 bis 780 nm) emittieren. Grundsätzlich ist es auch möglich, dass die Lumineszenzstrahlung in anderen Spektralbereichen als dem sichtbaren Bereich, beispielsweise im UV- oder IR-Bereich, insbesondere NIR-Bereich, liegt. Ferner absorbieren diese Stoffe Anregungsstrahlung bevorzugt im UV-Spektralbereich, beispielsweise im UV A- (380 bis 315 nm), UV B- (315 bis 280 nm) oder UV C-Spektralbereich (280 bis 200 nm). Grundsätzlich sind natürlich auch Lumineszenzstoffe denkbar, die Strahlung im sichtbaren oder IR-Spektralbereich absorbieren. In letzterem Falle handelt es sich dann, wenn die Lumineszenzstoffe Lumineszenzstrahlung im sichtbaren Spektralbereich emittieren, um Stoffe mit Anti-Stokes-Verschiebung.

Die Lumineszenzstoffe können bevorzugt in Form von Pigmenten vorliegen. Für die Lumineszenzstoffe wird auf die einschlägige Literatur verwiesen, beispielsweise auf 'Phosphor Handbook', 2nd Edition, ISBN: 0-8493-3564-7. Dessen Offenbarungsgehalt bezüglich dieser Stoffe wird hiermit in die vorliegende Anmeldung aufgenommen. Weiterhin sind typische Lumineszenzstoffe beispielsweise auch in DE 10 2009 040 747 B3, US 3,474,027 A, DE 198 60 093 A, DE 199 94 436 A1, DE 10 2010 026 627 A1 und DE 10 2007 035 592 A1 angegeben. Auch deren Offenbarungsgehalt wird hiermit in die vorliegende Anmeldung aufgenommen. Beispielsweise kann es sich um mit Seltenen Erden als Luminophore dotierte Wirtsgitter handeln. Diese Stoffe können beispielsweise eine Perowskit- oder Granatstruktur haben. Insbesondere mit Terbium, Cer und/oder Europium dotierte Stoffe sind geeignet, beispielsweise Oxysulfide und Oxynitride. Grundsätzlich können auch Phosphate, beispielsweise Calcium- oder Strontiumphosphate, Silicate, beispielsweise Zink- oder Erdalkalisilikate, Silikate und Aluminate der Seltenen Erden, Wolframate der Erdalkalimetalle, Zinkoxide, Zinksulfide und Oxide der Seltenen Erden eingesetzt werden, die mit Eu²⁺, Eu³⁺, Sb³⁺, Mn²⁺, Ag⁺, Cu⁺, Sn²⁺ oder Tb³⁺ oder noch anderen Elementen (Schwermetallionen) dotiert sind. Die hiermit gebildeten Pigmente können zusätzlich mit organischen Stoffen ummantelt sein, um die Quantenausbeute der Lumineszenz zu erhöhen. Ferner sind auch Quantum Dots einsetzbar, d.h. Halbleiterteilchen, deren Größe im nm-Bereich liegt, beispielsweise auf Basis von CdS. Lumineszenzstoffe sind beispielsweise unter dem Handelsnamen Lumilux® von Honeywell erhältlich, etwa Lumilux® CD740 (rot) und Lumilux® CD702 (grün). Als weitere Stoffe kommen auch Chelate von Elementen der Seltenen Erden in Frage. Ferner sind auch organische Lumineszenzstoffe verwendbar, wie Rhodamin 6G, Rhodamin B, Methylenblau, Anthrazin, Chinazolon, Benzoxazin oder Fluoreszein.

Die Absorbermittel können in üblicher Art und Weise durch Stoffe gebildet sein, die in dem Spektralbereich elektromagnetische Strahlung absorbieren, die zur Anregung zur Lumineszenz verwendet wird, beispielsweise UV-Strahlung in einem der drei vorgenannten UV-Spektralbereiche. Das mindestens eine Absorbermittel weist selbst keine Lumineszenzeigenschaften auf. Beispielsweise kann es sich um anorganische Stoffe, wie halbleitende Oxide, beispielsweise TiO₂, ZnO, ZrO₂, Fe₂O₃ und CeO₂, handeln. Grundsätzlich sind auch organische Stoffe, wie Benzotriazol, Bisoctrizol (Methylen-bis(benzotriazolyl)-tetramethylbutylphenol) und Bemotrizinol (Bis-(ethylhexyloxyphenol)-methoxyphenyl-triazin) verwendbar. Die genannten Stoffe absorbieren elektromagnetische Strahlung im UV-Bereich.

In einer weiteren bevorzugten Weiterbildung der vorliegenden Erfindung enthält der erste Elementbereich das mindestens eine Absorbermittel oder ist der erste Elementbereich von einer das mindestens eine Absorbermittel enthaltenden Abschirmzone umgeben. In der ersten dieser beiden Varianten befinden sich das erste Lumineszenzmittel und das Absorbermittel in demselben Volumenbereich des Sicherheitselements, in der zweiten Variante in unterschiedlichen Volumenbereichen, wobei in letzterem Falle eine Absorption der eingestrahlten elektromagnetischen Strahlung dadurch erreicht wird, dass der erste Elementbereich, in dem sich das erste Lumineszenzmittel befindet, von der Abschirmzone umgeben ist, beispielsweise in Form einer Umhüllung oder Schale.

In einer weiteren bevorzugten Weiterbildung der vorliegenden Erfindung umhüllt ein zweiter Elementbereich mindestens einen anderen (ersten) Elementbereich. Der umhüllende zweite Elementbereich ist dadurch gekennzeichnet, dass in ihm mindestens ein zweites Lumineszenzmittel enthalten ist, das nicht von erster (niederenergetischer) Anregungsstrahlung zur Lumineszenz anregbar ist, die zur Anregung der sich in dem mindestens einen umhüllten ersten Elementbereich befindenden ersten Lumineszenzmittel geeignet ist, sondern nur von zweiter (höherenergetischer) Anregungsstrahlung. Die erste Anregungsstrahlung, die zur Anregung der in dem umhüllten ersten Elementbereich enthaltenen ersten Lumineszenzmittel geeignet ist, kann in diesem Falle die Umhüllung ohne Absorption durch die außen liegenden zweiten Lumineszenzmittel und damit deren Anregung durchdringen. Dagegen kann die zweite Anregungsstrahlung, die zur Anregung der in dem umhüllenden zweiten Elementbereich enthaltenen zweiten Lumineszenzmittel geeignet ist, die innen liegenden ersten Lumineszenzmittel nicht zur Lumineszenz anregen, wenn in dem innen liegenden ersten Elementbereich das mindestens eine Absorbermittel enthalten ist.

In einer weiteren bevorzugten Weiterbildung der vorliegenden Erfindung ist das Sicherheitselement zumindest teilweise durch einen Kleber (Haftvermittler) gebildet. Dadurch kann das Sicherheitselement auf einem Substrat, beispielsweise einer Produktlage, insbesondere Dokumentenlage, oder dem Wert- oder Sicherheitsprodukt, fixiert werden. Der Kleber kann beispielsweise einen der Elementbereiche oder eine Abschirmzone bilden. Der Kleber kann ein Hotmelt-Kleber oder ein Reaktiv-Kleber sein. Der Kleber kann auch beispielsweise mindestens ein Polymer enthalten, das schon bei Raumtemperatur klebrig ist, oder durch dieses gebildet sein. Falls der Kleber ein Hotmelt-Kleber ist, enthält er mindestens ein Polymer, das erst bei erhöhter Temperatur, beispielsweise von 50 °C bis 200 °C, vorzugsweise von 80 °C bis 120 °C, klebrig wird. Ein Reaktiv-Kleber enthält mindestens ein Polymer, das zunächst nicht ausgehärtet und dann unter Einwirkung von elektromagnetischer Strahlung ausgehärtet wird, wodurch die feste Verbindung mit einer Substratoberfläche herbeigeführt wird. Beispielsweise kann der Haftvermittler ein Lack sein, zum Beispiel ein Acrylharz basierender Lack. Das Acrylharz kann unter UV-Bestrahlung aushärten. Der Haftvermittler kann ebenfalls durch mechanisches Anpressen aushärten, zum Beispiel bei Verwendung eines geeigneten Cyanoacrylat-Klebers. Der Kleber kann transparent oder transluzent oder opak sein. Falls der Kleber ein Lumineszenzmittel enthält, das nicht im sichtbaren Spektralbereich absorbiert, ist der Kleber auch in diesem spektralen Anregungsbereich vorzugsweise transparent oder transluzent. In diesem Falle bildet der Kleber einen Elementbereich.

In einer weiteren bevorzugten Weiterbildung der vorliegenden Erfindung ist das Sicherheitselement durch ein Filament gebildet, das mindestens zwei in Filament-Längsrichtung aufeinanderfolgende Elementbereiche und/oder mindestens zwei konzentrisch zueinander angeordnete Elementbereiche aufweist. In der ersten dieser beiden Varianten können sich Elementbereiche in axialer Richtung (in Filament-Längsrichtung) abwechseln. Wenn ein erster Elementbereich mit A (mit einem darin enthaltenen ersten Lumineszenzmittel) und ein zweiter Elementbereich mit B (mit einem darin enthaltenen zweiten Lumineszenzmittel) bezeichnet werden, können die Elementbereiche in axialer Richtung entsprechend ABAB... oder AB0AB0AB0... oder A0B0A0B0..., wobei ,0' einen Filamentbereich ohne Lumineszenzstoff bezeichnet, oder in noch anderer Art und Weise aufeinanderfolgen. Entsprechendes gilt für drei unterschiedliche Lumineszenzmittel A, B, C mit entsprechenden darin enthaltenen Lumineszenzmitteln (zum Beispiel entsprechend ABCABC... oder ABCBABCBA... oder in noch anderer Art und Weise) oder für vier, fünf oder noch mehr unterschiedliche Elementebereiche mit entsprechenden Lumineszenzmitteln. Falls zwei konzentrisch zueinander angeordnete Elementbereiche vorliegen, kann einer der Elementbereiche durch einen inneren Strang und ein zweiter Elementbereich durch einen den zuerst genannten Elementbereich umgebenden Bereich gebildet sein, wobei der zuletzt genannte Elementbereich den ersten Elementbereich beispielsweise in Längsrichtung vollständig umhüllen kann. In diesem Falle kann der innere Elementbereich beispielsweise das erste Lumineszenzmittel und der äußere Elementbereich das zweite Lumineszenzmittel enthalten. Das Absorbermittel ist vorzugsweise in dem inneren Elementbereich enthalten.

In noch einer weiteren Ausführungsform können auch mehrere einen (Filament-)Strang bildende Filamente jeweils einen der Elementbereiche bilden. Diese Filamente können parallel zueinander verlaufen und dann beispielsweise in Längsrichtung miteinander verbunden sein, oder sie können unter Bildung eines Zwirns miteinander verflochten sein. Demgemäß ist das erfindungsgemäße Sicherheitselement in noch einer weiteren bevorzugten Weiterbildung der vorliegenden Erfindung durch mindestens zwei miteinander verbundene Filamente gebildet, von denen vorzugsweise mindestens eines einen Kleberbereich in Filamentform bildet, oder der Strang ist von einem Kleberbereich umhüllt. Zumindest einige der mindestens zwei Filamente, einschließlich des Kleberbereiches, bilden in dieser Ausführungsform jeweils einen Elementbereich. Beispielsweise kann auch ein einen ersten Elementbereich bildendes Filament einen inneren Bereich und eine den inneren Bereich umgebende Umhüllung aufweisen. Der Strang kann aus zwei, drei, vier oder noch mehr Filamenten gebildet sein.

Derartige Multifilamente sind leicht herzustellen, indem sie in einem Extrusionsverfahren mittels Düsen mit mehreren Öffnungen erzeugt werden. Beispielsweise kann das Sicherheitselement durch ein Multifilament mit drei Strängen gebildet sein, von denen eines ein Kleberstrang ist. Die beiden anderen Stränge bilden einen ersten Elementbereich, der das erste Lumineszenzmittel enthält, und einen zweiten Elementbereich, der das zweite Lumineszenzmittel enthält. Eine weitere Ausführungsform von derartigen Multifilamenten besteht darin, zwei oder gegebenenfalls mehr als zwei Filamente parallel zueinander anzuordnen und diesen Multistrang dann mit einer Kleberhülle zu ummanteln. Die einzelnen Filamente des Stranges können jeweils einen Elementbereich mit jeweils einem Lumineszenzmittel bilden. Das Absorbermittel kann sich dann beispielsweise in der Kleberumhüllung oder in dem entsprechenden Elementbereich befinden.

In noch einer weiteren bevorzugten Weiterbildung der vorliegenden Erfindung umfassen die ersten Anregungsbedingungen die Einstrahlung von elektromagnetischer Strahlung im UV A-Bereich, und die zweiten Anregungsbedingungen umfassen die Einstrahlung von elektromagnetischer Strahlung im UV B- und/oder UV C-Bereich. Eine Verifizierung eines derartig ausgebildeten Sicherheitselements ist äußerst leicht, weil mit zwei üblichen Strahlungsquellen gearbeitet werden kann, nämlich einer ersten UV A-Strahlung erzeugenden Strahlungsquelle und einer zweiten UV B- und/oder UV C-Strahlung erzeugenden Strahlungsquelle.

Im Falle eines Elementbereiches, der ein durch UV C-Strahlung anregbares Lumineszenzmittel enthält, ist dafür zu sorgen, dass sich dieser in unmittelbarer Nähe zur Oberfläche oder an der Oberfläche des Wert- oder Sicherheitsprodukts befindet, da diese Anregungsstrahlung andernfalls in dem Produkt vollständig absorbiert würde, ohne das zweite Lumineszenzmittel zu erreichen.

In oder auf einem Wert- oder Sicherheitsprodukt können sich mehrere Arten von erfindungsgemäßen Sicherheitselementen befinden, die sich hinsichtlich ihrer Form, Farbe (Absorption/Remission im sichtbaren Spektralbereich) oder gerade in der Auswahl der Lumineszenzstoffe unterscheiden. Beispielsweise kann das Produkt zwei Arten von erfindungsgemäßen Sicherheitselementen enthalten, von denen eine erste Art beispielsweise zwei Lumineszenzmittel mit Absorptions- und Lumineszenzspektren der Typen A und B sowie mit einem Absorbermittel I und eine zweite Art beispielsweise drei Lumineszenzmittel mit Absorptions- und Lumineszenzspektren der Typen B, C und D sowie zwei Absorbermitteln I und II enthalten. Andere Kombinationen sind gleichfalls möglich.

Eine besonders vorteilhafte Ausgestaltung der vorliegenden Erfindung besteht darin, dass das erfindungsgemäße Sicherheitselement durch Melierfasern gebildet ist. Derartige Fasern werden beispielsweise bei der Papierherstellung in die Papiermatrix eingebettet, oder sie werden auf mindestens eine Lage eines aus mehreren Lagen beispielsweise durch Lamination zu bildenden Produktes aufgebracht, sodass sie beim Laminieren zwischen den Lagen fixiert werden. Derartige Fasern haben einen Durchmesser beispielsweise von 20 bis 150 µm, vorzugsweise von 50 bis 60 µm, und eine Länge beispielsweise von 2 bis 25 mm, vorzugsweise von 5 bis 8 mm, am meisten bevorzugt von 6 mm. Sie können hinsichtlich ihres Querschnittes charakterisiert werden. Beispielsweise kann der Querschnitt rund, insbesondere kreisförmig oder oval, sein oder durch ein Polygon, insbesondere ein Dreieck, definiert sein.

Die Melierfasern können beispielsweise aus Polyamid oder aus einem Polyamid-Copolymer hergestellt sein. Insbesondere können die Polyamide PA12, PA6 oder PA6.6 verwendet werden. Des Weiteren können die Melierfasern auch aus Polyethylen (PE), Polyethylenterephthalat (PET), Polyvinylchlorid (PVC), Cellulose oder deren Derivaten, zum Beispiel Viskose oder Cellophan, hergestellt sein. Polyamid ist bevorzugt, weil es die geringste Wechselwirkung zu den üblichen in der Personalisierung von Wert- oder Sicherheitsdokumenten eingesetzten Lasersystemen aufweist und damit bei einer Laserpersonalisierung selbst nicht geschwärzt wird. Außerdem wird das Produktmaterial bei Verwendung von PA für die Melierfasern auch in den Bereichen durch einen Laserstrahl geschwärzt, in denen sich solche Melierfasern befinden. Die Elementbereiche der Melierfasern können jeweils aus demselben Material oder aus unterschiedlichen Materialien gebildet sein. Beispielsweise kann das Material des ersten Elementbereiches oder einer diesen Elementbereich umgebenden Umhüllung das mindestens eine Absorbermittel bilden.

Mehrere erfindungsgemäße Sicherheitselemente können in einer Ebene auf oder in einem Wert- oder Sicherheitsprodukt ein Sicherheitsmerkmal bilden, indem sie in einem oder mehreren abgegrenzten Bereichen des Produkts oder in einem das gesamte Produkt erfassenden Bereich verteilt sind. Die Melierfasern oder Planchetten sind auf oder in dem Wert- oder Sicherheitsprodukt hinsichtlich ihrer Position und Ausrichtung vorzugsweise ungeordnet verteilt angeordnet. Sie können auf der Oberfläche einer Folie, die mit anderen Folien zu einem Produkt verarbeitet wird, in räumlich strukturierten Flächenbereichen angeordnet sein, sodass diese Sicherheitselemente in dem Produkt in dieser räumlichen Strukturierung vorliegen. Beispielsweise werden diese Sicherheitselemente in Form von Streifen auf die Folie aufgebracht, sodass es auf der Folie streifenförmige Bereiche gibt, in welchen derartige Sicherheitselemente vorliegen, sowie andere Bereiche, in denen sich keine derartigen Sicherheitselemente befinden. Innerhalb der Streifen oder anderen Flächenbereichen sind die Sicherheitselemente ungeordnet verteilt angeordnet. Des Weiteren können diese Sicherheitselemente auch in mehreren in räumlicher Beziehung zueinander stehenden Streifen auf der Oberfläche angeordnet sein. Diese Streifen können beispielsweise einen Barcode bilden. In unterschiedlichen Streifen können sich unterschiedliche Sicherheitselemente befinden. Diese Sicherheitselemente können sich hinsichtlich ihrer Form, Farbe oder der in ihnen enthaltenen Lumineszenzmittel und Absorbermittel voneinander unterscheiden. Beispielsweise kann eine erste Art von Sicherheitselementen in einem ersten Streifen enthalten sein und eine zweite Art in einem zweiten Streifen sowie eine dritte Art in einem dritten Streifen usw., etwa gemäß ABCDE..., wobei A, B, C, D und E jeweils eine Art von Sicherheitselementen in einem Streifen angibt. Alternativ können die Sicherheitselemente auch in der Folge ABAB... oder ABCABC... angeordnet sein. Des Weiteren können die Bereiche, in denen sich derartige Sicherheitselemente befinden, ein bestimmtes Muster bilden, beispielsweise ein Wappen, Siegel, Logo oder eine andere Darstellung. Eine andere Art von Sicherheitselementen kann dann zusätzlich die gesamte Fläche des Produkts ausfüllen.

Zur Herstellung erfindungsgemäßer Sicherheitselemente in Form von Melierfasern können mehrere Polymere, die hierzu geeignete Lumineszenzmittel und Absorbermittel in jeweils der gewünschten Kombination enthalten, in einem Extrusionsverfahren zu Polymerfilamenten verarbeitet werden, wobei beispielsweise mehrere parallel zueinander liegende Polymerfilamente oder ein oder mehrere innenliegende Polymerfilamente und eine außenliegende Umhüllung dieser Polymerfilamente mit einem weiteren Polymer oder einem Kleber gebildet werden, indem die Polymere durch entsprechend angeordnete Spinndüsen gleichzeitig gepresst werden. Für die Herstellung eines Stranges, der einen Kern und eine Ummantelung aufweist, sind mehrere äußere Spinndüsen für die Erzeugung der Ummantelung sowie zentrale Spinndüsen für die Erzeugung der innenliegenden Filamente vorgesehen, wobei die äußeren Spinndüsen um die zentralen Spinndüsen herum angeordnet sind. Zur Herstellung der Melierfasern wird der Strang in kurze Stücke zerschnitten.

Das Substrat, auf dessen mindestens eine Oberfläche die Sicherheitselemente aufgebracht und dort fixiert sind, kann zusammen mit weiteren Substraten, beispielsweise weiteren Polymerfolien oder anderen folienartigen Materialien, wie Papier, als Lagen zu einem Stapel zusammengetragen werden, sodass die mit den Sicherheitselementen versehene/n Oberfläche/n außen und/oder innenliegend angeordnet sind. Letzteres ist vorteilhaft, weil eine Fälschung oder Verfälschung des Produktes dann nur noch äußerst schwierig ist, denn die Ebene/n, in der/denen sich die Sicherheitselemente befinden, müsste/n hierzu freigelegt werden. Falls der Stapel durch Einbringung von Wärme und Pressdruck zu einem monolithischen Laminat verschweißt wird, verschmelzen vorzugsweise auch die Sicherheitselemente mit dem sie umgebenden Material, sodass eine Delamination noch weiter erschwert wird. Falls sich die Sicherheitselemente nach dem Laminieren an der Außenseite des Laminats befinden, können sie durch nachträgliches Überziehen mit einem Schutzlack oder mit einer Schutzfolie gegen Manipulationen geschützt werden. Außerdem dient dieser Schutzlack oder diese Schutzfolie zum Schutz des Produkts gegen mechanische Beschädigungen (Verkratzungen) bei der Benutzung. Ferner kann außenseitig auch eine diffraktive Folie angebracht werden. Falls das Substrat und weitere Substratlagen aus Polycarbonat gebildet sind, wird die Lamination typischerweise in einer Heiß/Kalt-Laminierpresse in einem ersten Schritt bei 170 bis 200 °C und einem Druck von 50 bis 600 N/cm² und in einem zweiten Schritt unter Kühlung etwa auf Raumtemperatur und unter demselben Druck durchgeführt. Im Falle von Polyethylenterephthalat findet die Lamination bei einer höheren Temperatur statt, beispielsweise bei 220 °C. Die Polymerfolien haben typischerweise eine Dicke von 25 bis 150 µm, vorzugsweise von 50 bis 100 µm.

Wenn sich die mindestens eine mit den Sicherheitselementen belegte Substratoberfläche im Wert- und/oder Sicherheitsprodukt innenliegend befindet, sind zumindest diejenigen Teile des Produkts, die sich vom Betrachter aus zwischen der mindestens einen Substratoberfläche und ihm befinden, vorzugsweise transparent oder zumindest transluzent und weiter bevorzugt farblos oder gegebenenfalls nur geringfügig gefärbt, um den mindestens einen Oberflächenbereich mit den Sicherheitselementen erkennen zu können. Sich jenseits einer Substratoberfläche, auf der die Sicherheitselemente angeordnet sind, befindendes Produktmaterial kann dagegen auch opak und gegebenenfalls gefärbt sein. Dieses jenseits liegende Produktmaterial kann alternativ natürlich ebenfalls transparent oder transluzent und farblos sein.

Das erfindungsgemäße Wert- und/oder Sicherheitsprodukt kann zusätzlich zu dem durch die Sicherheitselemente gebildeten Sicherheitsmerkmal mindestens ein weiteres Sicherheitsmerkmal aufweisen, das entweder individualisierend oder nicht individualisierend ist. Als weitere Sicherheitsmerkmale kommen Guillochen, Wasserzeichen, Prägedrucke, ein Sicherheitsfaden, Mikroschrift, Kippbilder, Hologramme, optisch variable Pigmente, lumineszierende Farben, Durchlichtpasser und dergleichen in Betracht. Ferner kann das Produkt auch elektronische Komponenten aufweisen, beispielsweise einen RFID-Schaltkreis mit Antenne und RFID-Mikrochip, elektronische Anzeigeelemente, LEDs, berührungsempfindliche Sensoren und dergleichen. Die elektronischen Komponenten können beispielsweise zwischen zwei opaken Lagen des Produkts versteckt angeordnet sein.

Die vorliegende Erfindung wird nachfolgend anhand von Figuren näher erläutert, wobei die dargestellten Beispiele lediglich exemplarischen Charakter haben und keine Einschränkung der Tragweite der beschriebenen Erfindung darstellen. Es zeigen im Einzelnen:
- Fig. 1:: eine schematische isometrische Darstellung eines Wert- oder Sicherheitsdokuments in Form einer personalisierten Karte mit einem Sicherheitsmerkmal mit erfindungsgemäßen Sicherheitselementen;
- Fig. 1A:: eine schematische Ansicht eines Sicherheitsmerkmals in einer Variante zu der in Fig. 1 gezeigten Ausführungsform;
- Fig. 2:: eine Darstellung der Anregung von zwei Lumineszenzmitteln in zwei verschiedenen Elementbereichen unter unterschiedlichen Anregungsbedingungen in einem Wellenlängenschema;
- Fig. 3:: eine schematische Ansicht einer Melierfaser in längs aufgeschnittener Darstellung in einer ersten Ausführungsform;
- Fig. 4:: einen schematischen Querschnitt durch die Melierfaser von Fig. 3;
- Fig. 5:: eine schematische Ansicht einer Melierfaser in längs aufgeschnittener Darstellung in einer zweiten Ausführungsform;
- Fig. 6:: eine schematische Ansicht einer Melierfaser in längs aufgeschnittener Darstellung in einer dritten Ausführungsform;
- Fig. 7:: einen schematischen Querschnitt durch eine Melierfaser in einer vierten Ausführungsform;
- Fig. 8:: einen schematischen Querschnitt durch eine Melierfaser in einer fünften Ausführungsform;
- Fig. 9:: einen schematischen Querschnitt durch eine Melierfaser in einer sechsten Ausführungsform.

In den Figuren bezeichnen gleiche Bezugszeichen Elemente mit derselben Funktion oder dieselben Elemente.

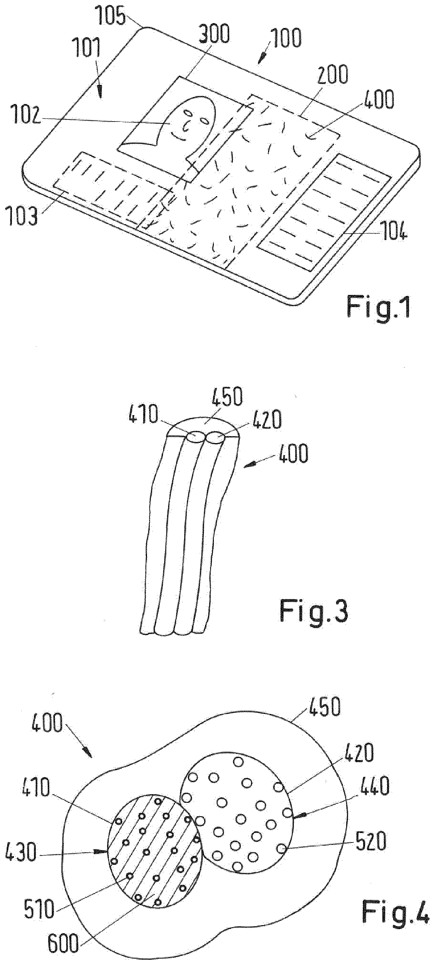

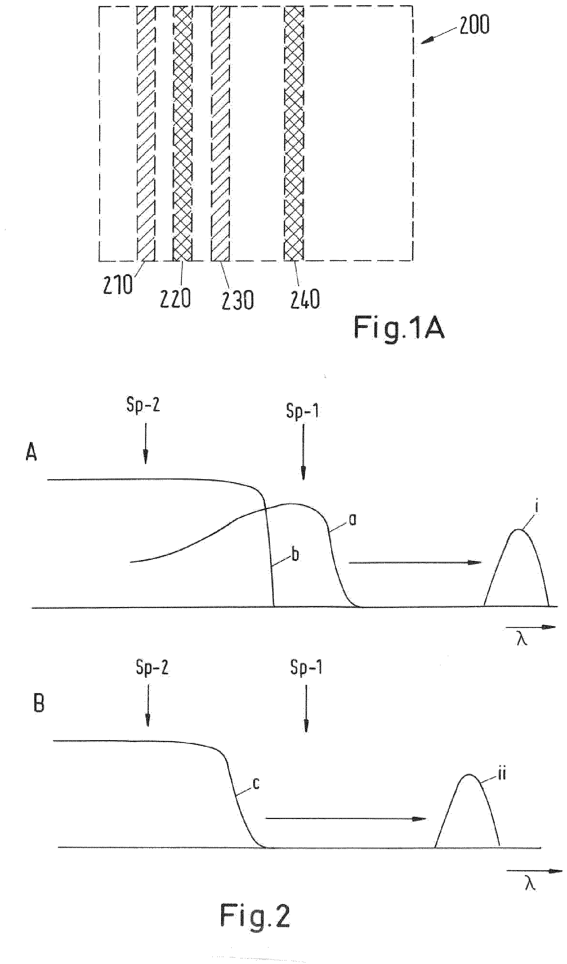

In Fig. 1 ist ein Wert- oder Sicherheitsdokument 100 in Form einer Karte, die ein Sicherheitsdokument ist, mit einem Sicherheitsmerkmal 200 dargestellt. Diese Sicherheitskarte kann beispielsweise als Laminat 105 aus mehreren Lagen gebildet sein, die im Wesentlichen aus Polycarbonat bestehen. Das Laminat bildet ein Substrat für die Aufbringung eines Sicherheitsmerkmals aus erfindungsgemäßen Sicherheitselementen, beispielsweise Melierfasern oder Planchetten, wobei die Sicherheitselemente auf der Oberfläche des Dokuments oder innerhalb des Dokuments auf einer die Lagen des Dokuments bildenden Folie angeordnet sein können. Das Dokument weist eine Vorderseite 101 und eine Rückseite (nicht sichtbar) auf. Einzelne dieser Lagen können mit Pigmenten opak eingefärbt sein. Die Karte hat beispielsweise das Format ID 1 gemäß ISO/IEC 7810. Die Karte kann beispielsweise eine Dicke von 800 µm haben. Zusätzlich zu anderen Sicherheitsmerkmalen, wie einem Gesichtsbild 102 des Karteninhabers auf einem Passphoto 300 und zwei Datenfeldern 103, 104, in dem individuelle Informationen des Inhabers in Klartext und/oder in kodierter Form gedruckt gespeichert sind, weist die Karte das Sicherheitsmerkmal mit den erfindungsgemäßen Sicherheitselementen auf.

In der in Fig. 1 gezeigten Ausführungsform überlappt das die erfindungsgemäßen Sicherheitselemente 400 enthaltende Sicherheitsmerkmal 200 teilweise mit dem Passphoto 300 und dem Datenfeld 103. Dadurch ist eine Manipulation des Passphotos und des Datenfeldes nachträglich feststellbar. Die Sicherheitselemente, hier Melierfasern, sind in dem hierfür vorgesehenen Feld möglichst gleichmäßig verteilt angeordnet, wobei deren Ausrichtung aber ungeordnet ist.

In einer alternativen Ausbildung des Sicherheitsmerkmals 200 sind die Sicherheitselemente 400, beispielsweise Melierfasern, in getrennt voneinander angeordneten streifenförmigen Feldern 210, 220, 230, 240, die parallel zueinander verlaufen, nach Art eines Barcode angeordnet (Fig. 1A). Die Melierfasern sind innerhalb dieser Felder wiederum gleichmäßig, aber hinsichtlich ihrer Ausrichtung ungeordnet verteilt angeordnet (Melierfasern nicht gezeigt). In den Feldern 210, 230 sind erfindungsgemäße Melierfasern eines ersten Typs und in den Feldern 220, 240 erfindungsgemäße Melierfasern eines zweiten Typs enthalten. Die Melierfasern dieser beiden Typen können beispielsweise bilumineszente Melierfasern, so wie sie weiter unten in der Figurenbeschreibung beschrieben und in Fig. 3, 4, 5, 6, 7, 8 und 9 dargestellt sind, sein. Diese Typen können sich beispielsweise hinsichtlich der darin enthaltenen Lumineszenzmittel und Absorbermittel unterscheiden, sodass bei Beleuchtung mit elektromagnetischer Strahlung unterschiedlicher Energie auch ein unterschiedliches Erscheinungsbild der Melierfasern in den Feldern erhalten wird. Beispielsweise können die Melierfasern in den Feldern 210, 230 bei Anregung mit Anregungsstrahlung bei den Energien E₁ und E₂ und die Melierfasern in den Feldern 220, 240 bei Anregung mit Anregungsstrahlung bei den Energien E₃ und E₄, die von E₁ und E₂ verschieden sind, lumineszieren.

Ein Sicherheitselement 400 der erfindungsgemäßen Art in einer ersten Ausführungsform ist in Fig. 3 gezeigt. Dieses Sicherheitselement ist durch eine Melierfaser gebildet, die aus einem Strang aus zwei parallel zueinander verlaufenden Filamenten 410, 420 und einer diese umgebenden Umhüllung 450 aus einem Klebermaterial besteht. Diese Melierfaser kann beispielsweise eine Länge von 2 mm haben. Jedes der beiden Filamente kann einen Durchmesser von beispielsweise 50 µm aufweisen. Die beiden Filamente sind beispielsweise aus Polyamid, zum Beispiel PA6.6, hergestellt. Die Melierfaser kann zum Beispiel mit einem Extrusionsverfahren hergestellt sein, indem Polyamid-Granulat geschmolzen und dann durch Spinndüsen, die nebeneinander angeordnet sind, extrudiert wird, sodass die beiden Filamente entstehen und sich durch deren anfängliche Klebrigkeit bei erhöhter Temperatur miteinander verbinden. Ein dieses Doppelfilament umhüllender Klebermantel 450 kann durch einen Hotmelt-Kleber oder einen Reaktiv-Kleber gebildet sein. Zur Herstellung des Klebermantels um das Doppelfilament wird das Klebermaterial gleichzeitig mit den beiden Filamenten aus weiteren um die beiden Spinndüsen für die Filamente herum angeordnete Spinndüsen extrudiert, sodass sich das Klebermaterial um das Doppelfilament gleichmäßig herum legt. Nach der Herstellung des Extrusionsstranges wird dieser in kurze Abschnitte zerhackt, sodass Melierfasern einer bestimmten Länge entstehen.

Der Aufbau dieser Melierfaser 400 ist in Fig. 4 im Querschnitt schematisch dargestellt. Das erste Filament 410 bildet einen ersten Elementbereich 430 und das zweite Filament 420 einen zweiten Elementbereich 440. Die beiden Elementbereiche erstrecken sich jeweils über die gesamte Länge der Filamente. In dem ersten Filament 410 und damit ersten Elementbereich 430 befinden sich Pigmentpartikel eines ersten Lumineszenzmittels 510, beispielsweise eines mittels UV A-Strahlung anregbaren Pigments, etwa von Lumilux® 740 (Honeywell) in einer Konzentration von zum Beispiel 3 Gew.-%, bezogen auf das Filamentmaterial, das bei der Anregung durch UV A-Strahlung rot luminesziert. Außerdem enthält das erste Filament fein verteilt ein Absorbermittel 600, das im UV B- und UV C-Bereich elektromagnetische Strahlung absorbiert. Es handelt sich beispielsweise um mikro- oder nanoskaliges ZnO in einer Konzentration von 1 Gew.-%, bezogen auf das Filamentmaterial. In dem zweiten Filament 420 und damit zweiten Elementbereich 440 befinden sich Pigmentpartikel eines zweiten Lumineszenzmittels 520, beispielsweise eines mittels UV C-Strahlung anregbaren Pigments, etwa von ZnSiO₄:Mn (dotiert) in einer Konzentration von zum Beispiel 5 Gew.-%, bezogen auf das Filamentmaterial. Da UV C-Strahlung von diversen Materialien, auch dem Material der Karte 100, sehr stark absorbiert wird, sind die das Sicherheitsmerkmal bildenden Melierfasern in unmittelbarer Nähe zur Oberfläche der Karte angeordnet, beispielsweise unmittelbar unter einer dünnen Lackdeckschicht.

Diese Sicherheitselemente 400 (Melierfasern) sind vor der Lamination vorzugsweise auf eine Oberfläche des Laminats, aus dem die Karte 100 hergestellt ist, aufgestreut worden, wobei eine möglichst gleichmäßige, aber hinsichtlich der Ausrichtung der Elemente statistische Verteilung erreicht wird (Fig. 1). Durch Erhitzen der Laminatfolie beim Aufstreuen erweicht das Hotmelt-Klebermaterial der Sicherheitselemente, sodass diese auf der Folie fixiert werden. Falls der Kleber ein Reaktiv-Kleber ist, wird die mit den Melierfasern bestreute Folie mit geeigneter Strahlung, beispielsweise UV-Strahlung, beleuchtet, um den Kleber zu härten und so eine Verbindung mit der Folie herzustellen.

Die Funktionsweise der Sicherheitselemente wird anhand von Fig. 2 näher erläutert:
In Fig. 2 sind für die beiden Elementbereiche 430 (Bereich A) und 440 (Bereich B) die Absorption des jeweiligen Lumineszenzmittels 510, 520 bzw. des Absorbermittels 600 in Abhängigkeit von der Anregungswellenlänge λ wiedergegeben.

In der oberen Darstellung werden die Verhältnisse für den Bereich A (Elementbereich 430) wiedergegeben: Der Bereich A enthält einen Pigment-Lumineszenzstoff als erstes Lumineszenzmittel 510 (Pigment Lumilux® 740 (Honeywell)), der rot luminesziert und der eine Absorption im UV A-Bereich hat (Kurve a). Außerdem enthält der Bereich A ein Absorbermittel 600 (ZnO), das im UV B- und UV C-Bereich absorbiert (Kurve b). Bei Einstrahlung von elektromagnetischer Strahlung im UV A-Bereich (erste Anregungsbedingungen Sp-1) wird diese von dem ersten Lumineszenzmittel absorbiert, sodass dieses im sichtbaren Spektralbereich luminesziert (Kurve i). Bei Einstrahlung von elektromagnetischer Strahlung im UV B- oder UV C-Bereich (zweite Anregungsbedingungen Sp-2) wird diese Strahlung von dem Absorbermittel absorbiert, sodass sie von dem ersten Lumineszenzmittel nicht absorbiert werden kann. Daher luminesziert das sich in dem ersten Elementbereich 430 befindende erste Lumineszenzmittel 510 unter diesen Anregungsbedingungen (Sp-2) nicht.

In der unteren Darstellung werden die Verhältnisse für den Bereich B (Elementbereich 440) wiedergegeben: Der Bereich B enthält das zweite Lumineszenzmittel 520 (ZnSiO₄:Mn), das grün luminesziert und das eine Absorption im UV B- und UV C-Bereich hat (Kurve c). Dieser Bereich enthält kein Absorbermittel 600. Bei Einstrahlung von elektromagnetischer Strahlung im UV A-Bereich (erste Anregungsbedingungen Sp-1) wird diese von dem zweiten Lumineszenzmittel nicht absorbiert. Bei Einstrahlung von elektromagnetischer Strahlung im UV B- oder UV C-Bereich (zweite Anregungsbedingungen Sp-2) wird diese Strahlung von dem zweiten Lumineszenzmittel dagegen absorbiert, sodass dieser zweite Elementbereich 440 grün luminesziert (Kurve ii).

Durch Einstrahlung von elektromagnetischer Strahlung unterschiedlicher Energie (UV A, erste Anregungsbedingungen Sp-1 einerseits oder UV B / UV C, zweite Anregungsbedingungen Sp-2 andererseits) lumineszieren die beiden Elementbereiche A, B (430, 440) in unterschiedlichen Farben und zwar mit den reinen Leuchtfarben der jeweiligen Lumineszenzmittel 510, 520. Damit wird eine Umschaltbarkeit der Lumineszenz geschaffen.

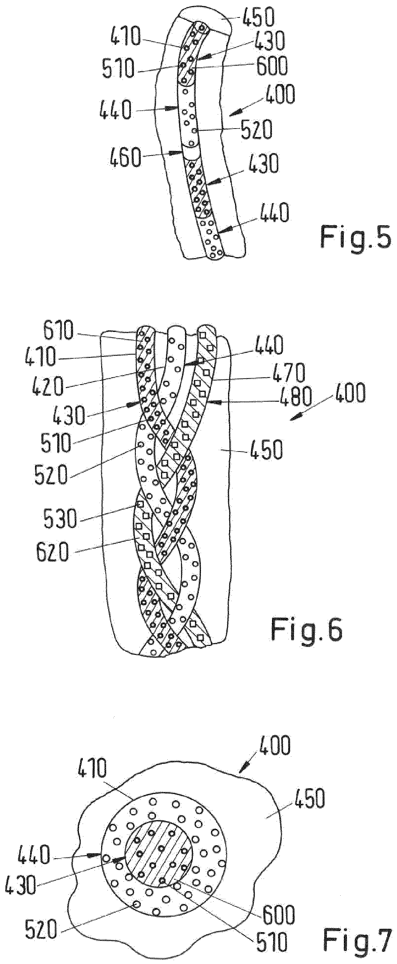

In Fig. 5 ist eine zweite Ausführungsform eines erfindungsgemäßen Sicherheitselements 400 in Form einer Melierfaser gezeigt. Diese Faser ist aus einem einzigen Filament 410 gebildet, das von einer Kleber-Umhüllung 450 umgeben ist. Der Kleber kann wiederum ein Hotmelt-Kleber oder auch ein Reaktiv-Kleber sein. Dieser dient dazu, die Fasern in dem Wert- oder Sicherheitsdokument 100 fest zu verankern. In dem Filament sind mehrere Elementbereiche 430, 440 gebildet, die zusammen mit Bereichen 460, die kein Lumineszenzmittel enthalten, in axialer Richtung alternierend aufeinander folgen. In den ersten Elementbereichen 430 sind Pigmentpartikel eines ersten Lumineszenzmittels 510 sowie ein Absorbermittel 600 und in den zweiten Elementbereichen 440 Pigmentpartikel eines zweiten Lumineszenzmittels 520 enthalten.

Ebenso wie im Falle der ersten Ausführungsform, die in Fig. 3, 4 gezeigt ist, lumineszieren bei einer Anregung mit UV A-Strahlung (erste Anregungsbedingungen Sp-1) nur die ersten Elementbereiche 430 beispielsweise rot, weil das darin enthaltene erste Lumineszenzmittel 510 zum Beispiel durch das Pigment Lumilux® 740 (Honeywell) gebildet ist, das diese Strahlung absorbiert, und eine Anregung des zweiten zum Beispiel durch das Pigment ZnSiO₄:Mn (dotiert) gebildeten Lumineszenzmittels 520 in den zweiten Elementbereichen 440 mangels Absorption von UV A-Strahlung nicht möglich ist. Bei einer Anregung mit UV B oder UV C-Strahlung (zweite Anregungsbedingungen Sp-2) lumineszieren dagegen nur die zweiten Elementbereiche 440 beispielsweise grün, weil dort das Pigment ZnSiO₄:Mn (dotiert) enthalten ist, das diese Strahlung absorbiert, und weil eine Anregung des ersten Lumineszenzmittels 510 wegen des in den ersten Elementbereichen 410 enthaltenen Absorbermittels 600 nicht möglich ist. Die Bereiche 460 lumineszieren unter keinen Anregungsbedingungen.

In Fig. 6 ist eine dritte Ausführungsform eines erfindungsgemäßen Sicherheitselements 400 in Form einer Melierfaser mit drei verschiedenen Filamenten 410, 420, 470 gezeigt, die jeweils Elementbereiche 430, 440, 480 bilden, die sich jeweils über das gesamte Filament erstrecken. Die einzelnen Filamente sind miteinander verflochten. Die Filamente können beispielsweise aus PA6.6 gebildet sein. Der Filamentstrang aus den drei Filamenten ist zusätzlich mit einem Klebermantel 450, beispielsweise aus einem Hotmelt-Kleber oder einem Reaktiv-Kleber, umgeben.

In dieser Ausführungsform bildet das erste Filament 410 einen ersten Elementbereich 430. Das zweite Filament 420 bildet einen zweiten Elementbereich 440, und das dritte Filament 470 bildet einen dritten Elementbereich 480. Jedes dieser Filamente enthält ein Lumineszenzmittel, nämlich das erste Filament 410 ein erstes Lumineszenzmittel 510, das zweite Filament 420 ein zweites Lumineszenzmittel 520 und das dritte Filament 470 ein drittes Lumineszenzmittel 530. Das erste Lumineszenzmittel 510 absorbiert Strahlung im UV A-, UV B- und im UV C-Bereich. Das zweite Lumineszenzmittel 520 absorbiert Strahlung ausschließlich im UV C-Bereich, und das dritte Lumineszenzmittel 530 absorbiert Strahlung ausschließlich im UV B- und im UV C-Bereich. Ferner enthält das erste Filament 410 ein erstes Absorbermittel 610 und das dritte Filament 470 ein zweites Absorbermittel 620.

Damit bei Anregung der Melierfaser 400 mit UV C-Strahlung (dritte Anregungsbedingung Sp-3) ausschließlich das zweite Lumineszenzmittel 520 im zweiten Filament 420 luminesziert, absorbieren das erste und das zweite Absorbermittel 610, 620 UV C-Strahlung. Damit außerdem bei Anregung der Melierfaser mit UV B-Strahlung (zweite Anregungsbedingungen Sp-2) ausschließlich das dritte Lumineszenzmittel 530 im dritten Filament 470 luminesziert, absorbiert zusätzlich das erste Absorbermittel 610 UV B-Strahlung. Bei Einstrahlung von UV A-Strahlung (erste Anregungsbedingungen Sp-1) luminesziert somit nur das erste Lumineszenzmittel 510 in dem ersten Filament 410, da diese Strahlung die beiden anderen Lumineszenzmittel 520, 530 nicht anzuregen vermag. Bei Einstrahlung von UV B-Strahlung luminesziert somit ferner nur das dritte Lumineszenzmittel 530 in dem dritten Filament 470, weil das erste Absorbermittel 610 in dem ersten Filament 410 diese Strahlung absorbiert und somit die Anregung des ersten Lumineszenzmittels 510 in diesem Filament verhindert und weil diese Strahlung zudem das zweite Lumineszenzmittel 520 in dem zweiten Filament 420 nicht anzuregen vermag. Bei Einstrahlung von UV C-Strahlung luminesziert somit schließlich nur das zweite Lumineszenzmittel 520 in dem zweiten Filament 420, da die beiden Absorbermittel 610, 620 in den beiden anderen Filamenten 410, 470 diese Strahlung absorbieren und damit die Anregung der darin enthaltenen Lumineszenzmittel 510, 530 verhindern.

In noch einer weiteren Ausführungsform, die in Fig. 7 im Querschnitt gezeigt ist, weist ein Filament 410 einer Melierfaser 400 einen inneren ersten Elementbereich 430 und einen diesen umgebenden zweiten Elementbereich 440 auf. Beide Bereiche des Filaments können beispielsweise aus PA6.6 gebildet sein. Dieses Filament kann ferner von einem Klebermantel 450 umgeben sein, der beispielsweise durch einen Hotmelt-Kleber oder durch einen Reaktiv-Kleber gebildet ist.

Der erste Elementbereich 430 enthält beispielsweise Pigmentpartikel eines ersten Lumineszenzmittels 510, das beispielsweise im UV A-Bereich (erste Anregungsbedingungen Sp-1) absorbiert, sowie ein Absorbermittel 600, das im UV B- und UV C-Bereich absorbiert. Dieses Lumineszenzmittel kann wiederum das Pigment Lumilux® 740 (Honeywell) sein, und das Absorbermittel kann ZnO sein. Im zweiten Elementbereich 440 befinden sich beispielsweise Pigmentpartikel eines zweiten Lumineszenzmittels 520, das im UV C-Bereich (zweite Anregungsbedingungen Sp-2) angeregt wird. Es kann sich wiederum um ZnSiO₄:Mn (dotiert) handeln. Bei Anregung der Melierfaser 400 mit UV A-Strahlung wird lediglich das erste Lumineszenzmittel 510 im ersten Elementbereich 430 zur roten Lumineszenz angeregt. Bei Einstrahlung von UV C-Strahlung wird dagegen ausschließlich das zweite Lumineszenzmittel 520 im zweiten Elementbereich 440 zur grünen Lumineszenz angeregt, da das Absorbermittel 600 im ersten Elementbereich 430 die Anregung des ersten Lumineszenzmittels 510 verhindert.

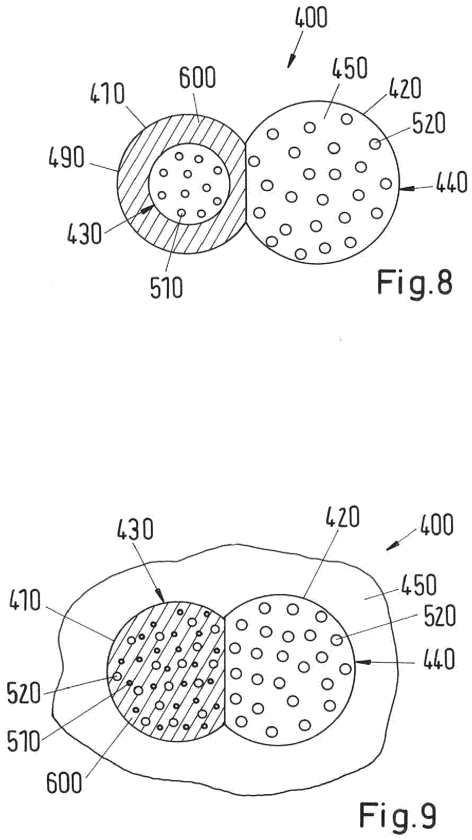

In noch einer weiteren (fünften) Ausführungsform bilden zwei Filamente 410, 420 eine Melierfaser 400 (Fig. 8). Diese beiden Filamente verlaufen parallel zueinander und sind miteinander verbunden. Das zweite Filament 420 ist beispielsweise durch einen Hotmelt-Kleber oder einen Reaktiv-Kleber gebildet. Das erste Filament 410 ist beispielsweise aus PA6.6 gebildet. Das erste Filament besteht aus einem Kern, der einen ersten Elementbereich 430 bildet und der sich über die gesamte Länge der Melierfaser erstreckt. In dem ersten Elementbereich befinden sich beispielsweise Pigmentpartikel eines ersten Lumineszenzmittels 510, beispielsweise Lumilux® 740 (Honeywell). Dieses Lumineszenzmittel absorbiert ausschließlich im UV A-Bereich (erste Anregungsbedingungen Sp-1). In einer den ersten Elementbereich umgebenden Umhüllung 490, die ebenfalls aus PA6.6 gebildet sein kann, ist ein erstes Absorbermittel 600 enthalten, das im UV B- und UV C-Bereich absorbiert, beispielsweise ZnO. Das zweite Filament 420 bildet einen zweiten Elementbereich 440, der sich ebenfalls über die gesamte Länge der Melierfaser erstreckt und in dem beispielsweise Pigmentpartikel eines zweiten Lumineszenzmittels 520 enthalten sind, beispielsweise ZnSiO₄:Mn (dotiert). Durch Einstrahlung von UV C-Strahlung (zweite Anregungsbedingungen Sp-2) luminesziert das zweite Lumineszenzmittel in diesem Elementbereich grün. In diesem Falle bildet also der Kleber den zweiten Elementbereich 440. Außerdem ist das Absorbermittel nicht in einem Elementbereich enthalten, der ein Lumineszenzmittel enthält, sondern in der Abschirmzone 490, der somit den ersten Elementbereich 430 gegen die Einstrahlung von höherenergetischer Strahlung abschirmt.

In Fig. 9 ist noch eine weitere (sechste) Ausführungsform der vorliegenden Erfindung im Querschnitt dargestellt, die durch ein Sicherheitselement 400 in Form einer Melierfaser gebildet ist. In diesem Falle ist die Melierfaser durch zwei parallel zueinander verlaufende Filamente 410, 420, die miteinander verbunden sind, gebildet. Beide Filamente können beispielsweise aus PA6.6 gebildet sein. Dieses Doppelfilament ist außerdem mit einem Klebermantel 450 beispielsweise aus einem Hotmelt- oder Reaktiv-Kleber umhüllt.

Das erste Filament 410 bildet einen ersten Elementbereich 430, der sich über die gesamte Länge der Melierfaser 400 erstreckt, und enthält beispielsweise Pigmentpartikel eines ersten Lumineszenzmittels 510, das beispielsweise im UV A-Bereich absorbiert, beispielsweise Lumilux® 740 (Honeywell), ferner beispielsweise Pigmentpartikel eines zweiten Lumineszenzmittels, das beispielsweise ausschließlich im UV C-Bereich absorbiert, beispielsweise ZnSiO₄:Mn (dotiert), sowie ein Absorbermittel 600, das im UV B- und UV C-Bereich absorbiert. Das zweite Filament 420 bildet einen zweiten Elementbereich 440, der sich ebenfalls über die gesamte Länge der Melierfaser erstreckt. Dieses Filament enthält ausschließlich die Pigmentpartikel des zweiten Lumineszenzmittels 520.

Bei einer Anregung der Melierfaser 400 mit UV A-Strahlung (erste Anregungsbedingungen Sp-1) luminesziert ausschließlich das erste Lumineszenzmittel 510 im ersten Filament 410, da das zweite Lumineszenzmittel 520 in dem ersten Filament 410 und in dem zweiten Filament 420 unter diesen Bedingungen nicht anregbar ist. Daher zeigt die Melierfaser unter diesen ersten Anregungsbedingungen Sp-1 eine rote Lumineszenz im ersten Elementbereich 430, d.h. im Bereich des ersten Filaments. Bei einer Anregung der Melierfaser mit UV C-Strahlung (zweite Anregungsbedingungen Sp-2) luminesziert ausschließlich das zweite Lumineszenzmittel 520 im zweiten Filament 420, da das Absorbermittel 600 in dem ersten Filament 410 die Absorption dieser Strahlung sowohl durch das erste Lumineszenzmittel 510 als auch durch das zweite Lumineszenzmittel 520 und damit deren Anregung zur Lumineszenz verhindert. Somit zeigt die Melierfaser unter diesen Anregungsbedingungen Sp-2 eine grüne Lumineszenz ausschließlich im zweiten Elementbereich 440, d.h. im Bereich des zweiten Filaments.

### Bezugszeichen

- 100: Wert- oder Sicherheitsprodukt, Wert- oder Sicherheitsdokument, Sicherheitskarte
- 102: Gesichtsbild
- 103: Datenfeld
- 104: Datenfeld
- 105: Laminat
- 200: Sicherheitsmerkmal
- 210: streifenförmiges Feld
- 220: streifenförmiges Feld
- 230: streifenförmiges Feld
- 240: streifenförmiges Feld
- 300: Passphoto
- 400: Sicherheitselement, Melierfaser
- 410: (erstes) Filament
- 420: (zweites) Filament, Kleberbereich
- 430: erster Elementbereich (Bereich A)
- 440: zweiter Elementbereich (Bereich B)
- 450: Kleber, (Kleber-)Umhüllung, Klebermantel
- 460: Elementbereich ohne Lumineszenzmittel
- 470: drittes Filament
- 480: dritter Elementbereich
- 490: Umhüllung, Abschirmzone
- 510: erstes Lumineszenzmittel
- 520: zweites Lumineszenzmittel
- 530: drittes Lumineszenzmittel
- 600: Absorbermittel
- 610: erstes Absorbermittel
- 620: zweites Absorbermittel
- a: Wellenlängenabhängigkeit der Absorption des ersten Lumineszenzmittels
- b: Wellenlängenabhängigkeit der Absorption des Absorbermittels
- c: Wellenlängenabhängigkeit der Absorption des zweiten Lumineszenzmittels
- i: Wellenlängenabhängigkeit der Lumineszenz des ersten Lumineszenzmittels
- ii: Wellenlängenabhängigkeit der Lumineszenz des zweiten Lumineszenzmittels
- Sp-1: erste Anregungsbedingung
- Sp-2: zweite Anregungsbedingung
- Sp-3: dritte Anregungsbedingung

## Patentansprüche

1. Multilumineszentes Sicherheitselement (400), enthaltend mindestens ein erstes Lumineszenzmittel (510), das unter ersten Anregungsbedingungen (Sp-1) zur Lumineszenz anregbar ist, und mindestens ein zweites Lumineszenzmittel (520), das unter zweiten Anregungsbedingungen (Sp-2) zur Lumineszenz anregbar ist, die von den ersten Anregungsbedingungen (Sp-1) verschieden sind, **dadurch gekennzeichnet, dass** in dem multilumineszenten Sicherheitselement (400) zusätzlich mindestens ein Absorbermittel (600) enthalten ist, das eine Anregung des mindestens einen ersten Lumineszenzmittels (510) unter den zweiten Anregungsbedingungen (Sp-2) zur Lumineszenz, nicht aber unter den ersten Anregungsbedingungen (Sp-1) verhindert.

2. Multilumineszentes Sicherheitselement (400) nach Anspruch 1, **dadurch gekennzeichnet, dass** das Sicherheitselement (400) zumindest zwei räumlich voneinander getrennte Elementbereiche (430, 440) aufweist, wobei in einem ersten Elementbereich (430) das mindestens eine erste Lumineszenzmittel (510) enthalten ist und wobei in einem zweiten Elementbereich (440) das mindestens eine zweite Lumineszenzmittel (520) enthalten ist.

3. Multilumineszentes Sicherheitselement (400) nach einem der vorstehenden Ansprüche, **dadurch gekennzeichnet, dass** der erste Elementbereich (430) zusätzlich das mindestens eine Absorbermittel (600) enthält oder von einer das mindestens eine Absorbermittel (600) enthaltenden Abschirmzone (490) umgeben ist.

4. Multilumineszentes Sicherheitselement (400) nach einem der vorstehenden Ansprüche, **dadurch gekennzeichnet, dass** das Sicherheitselement (400) zumindest teilweise durch einen Kleber (450) gebildet ist.

5. Multilumineszentes Sicherheitselement (400) nach einem der vorstehenden Ansprüche, **dadurch gekennzeichnet, dass** das Sicherheitselement (400) durch mindestens ein Filament (410, 420) gebildet ist, das mindestens zwei in Filament-Längsrichtung voneinander getrennte Elementbereiche (430, 440) und/oder mindestens zwei konzentrisch zueinander angeordnete Elementbereiche (430, 440) aufweist.

6. Multilumineszentes Sicherheitselement (400) nach Anspruch 5, **dadurch gekennzeichnet, dass** das Sicherheitselement (400) durch mindestens zwei miteinander verbundene Filamente (410, 420) oder durch mindestens ein Filament (410) und einen Kleberbereich (420) gebildet ist und dass zumindest einige der mindestens zwei Filamente (410, 420) und/oder der Kleberbereich (420) jeweils einen Elementbereich (430, 440) bilden.

7. Multilumineszentes Sicherheitselement (400) nach einem der vorstehenden Ansprüche, **dadurch gekennzeichnet, dass** die ersten Anregungsbedingungen (Sp-1) die Einstrahlung von elektromagnetischer Strahlung im UV A-Bereich umfasst und dass die zweiten Anregungsbedingungen (Sp-2) die Einstrahlung von elektromagnetischer Strahlung im UV B- und/oder UV C-Bereich umfasst.

8. Wert oder Sicherheitsprodukt (100), enthaltend mindestens ein multilumineszentes Sicherheitselement (400) gemäß einem der Ansprüche 1 bis 7.

## Claims

1. Multi-luminescent security element (400), comprising at least one first luminescence means (510), which can be excited under first excitation conditions (Sp-1) for the purpose of luminescence, and at least one second luminescence means (520) which can be excited under second excitation conditions (Sp-2) for the purpose of luminescence, which are different from the first excitation conditions (Sp-1), **characterised in that**, in addition, at least one absorber means (600) is contained in the multi-luminescent security element (400), which prevents an excitation of the at least one first luminescence means (510) under the second excitation conditions (Sp-2) for the purpose of luminescence, but not under the first excitation conditions (Sp-1).

2. Multi-luminescent security element (400) according to claim 1, **characterised in that** the security element (400) comprises at least two spatially separated element regions (430, 440), wherein, in a first element region (430), the at least one first luminescence means (510) is contained, and wherein, in a second element region (440), the at least one second luminescence means (520) is contained.

3. Multi-luminescent security element (400) according to any one of the preceding claims, **characterised in that** the first element region (430) additionally contains the at least one absorber means (600), or is surrounded by a screening zone (490) containing the at least one absorber means (600).

4. Multi-luminescent security element (400) according to any one of the preceding claims, **characterised in that** the security element (400) is formed at least partially by an adhesive (450).

5. Multi-luminescent security element (400) according to any one of the preceding claims, **characterised in that** the security element (400) is formed by at least one filament (410, 420), which comprises at least two element regions (430, 440), separated from one another in the filament longitudinal direction, and/or comprises at least two element regions (430, 440) arranged concentrically to one another.

6. Multi-luminescent security element (400) according to claim 5, **characterised in that** the security element (400) is formed by at least two filaments (410, 420) connected to one another, or by at least one filament (410) and an adhesive region (420), and that at least some of the at least two filaments (410, 420) and/or the adhesive region (420) in each case form an element region (430, 440).

7. Multi-luminescent security element (400) according to any one of the preceding claims, **characterised in that** the first excitation conditions (Sp-1) comprises the irradiation of electromagnetic radiation in the UV A range, and that the second excitation conditions (Sp-2) comprise the irradiation of electromagnetic radiation in the UV B and/or UV C range.

8. Value product or security product (100), containing at least one multi-luminescent security element (400) according to any one of claims 1 to 7.

## Revendications

1. Elément de sécurité (400) multiluminescent, contenant au moins un premier moyen luminescent (510), qui peut être excité pour produire une luminescence dans des premières conditions d'excitation (Sp-1), et au moins un deuxième moyen luminescent (520), qui peut être excité pour produire une luminescence dans des deuxièmes conditions d'excitation (Sp-2), qui sont différentes des premières conditions d'excitation (Sp-1), **caractérisé en ce qu'**est contenu, dans l'élément de sécurité (400) multiluminescent, en outre au moins un moyen absorbant (600), qui empêche une excitation de l'au moins un premier moyen luminescent (510) pour produire une luminescence dans les deuxièmes conditions d'excitation (Sp-2), toutefois pas dans les premières conditions d'excitation (Sp-1).

2. Elément de sécurité (400) multiluminescent selon la revendication 1, **caractérisé en ce que** l'élément de sécurité (400) présente au moins deux zones d'élément (430, 440) séparées l'une de l'autre spatialement, dans lequel l'au moins un premier moyen luminescent (510) est contenu dans une première zone d'élément (430) et dans lequel l'au moins un deuxième moyen luminescent (520) est contenu dans une deuxième zone d'élément (440).

3. Elément de sécurité (400) multiluminescent selon l'une quelconque des revendications précédentes, **caractérisé en ce que** la première zone d'élément (430) contient en outre l'au moins un moyen absorbant (600) ou est entourée par une zone de protection (490) contenant l'au moins un moyen absorbant (600).

4. Elément de sécurité (400) multiluminescent selon l'une quelconque des revendications précédentes, **caractérisé en ce que** l'élément de sécurité (400) est formé au moins en partie par une colle (450).

5. Elément de sécurité (400) multiluminescent selon l'une quelconque des revendications précédentes, **caractérisé en ce que** l'élément de sécurité (400) est formé par au moins un filament (410, 420), qui présente au moins deux zones d'élément (430, 440) séparées l'une de l'autre dans le sens longitudinal de filament et/ou au moins deux zones d'élément (430, 440) disposées de manière concentrique les unes par rapport aux autres.

6. Elément de sécurité (400) multiluminescent selon la revendication 5, **caractérisé en ce que** l'élément de sécurité (400) est formé par au moins deux filaments (410, 420) reliés les uns aux autres ou par au moins un filament (410) et une zone de colle (420), et qu'au moins certains des au moins deux filaments (410, 420) et/ou la zone de colle (420) forment respectivement une zone d'élément (430, 440).

7. Elément de sécurité (400) multiluminescent selon l'une quelconque des revendications précédentes, **caractérisé en ce que** les premières conditions d'excitation (Sp-1) comprennent le rayonnement d'un rayonnement électromagnétique dans la plage UV A, et que les deuxièmes conditions d'excitation (Sp-2) comprennent le rayonnement d'un rayonnement électromagnétique dans la plage UV B et/ou UV C.

8. Produit de valeur ou de sécurité (100), contenant au moins un élément de sécurité (400) multiluminescent selon l'une quelconque des revendications 1 à 7.
